# NEUE EUROPÄISCHE PATENTSCHRIFT

(11) **EP 2 890 912 B2**
(45) Veröffentlichungstag und Bekanntmachung des Hinweises auf die Entscheidung über den Einspruch: **04.03.2020**
(45) Hinweis auf die Patenterteilung: 03.05.2017
(21) Anmeldenummer: 13745840.2
(22) Anmeldetag: 06.08.2013
(51) Int. Cl.: F16D 13/68, F16D 13/72

(54) **SEGMENTIERTE ANPRESSPLATTE FÜR EINE REIBKUPPLUNG, ENTSPRECHENDE REIBKUPPLUNG UND ENTSPRECHENDES KRAFTFAHRZEUG**
SEGMENTED PRESSURE PLATE FOR A FRICTION CLUTCH, CORRESPONDING FRICTION CLUTCH AND CORRESPONDING MOTOR VEHICLE
PLATEAU DE PRESSION SEGMENTÉ POUR EMBRAYAGE À FRICTION, ET EMBRAYAGE À FRICTION ET VÉHICULE À MOTEUR CORRESPONDANTS

(30) Priorität: 31.08.2012 DE 102012215519
(43) Veröffentlichungstag der Anmeldung: 08.07.2015
(73) Patentinhaber: Schaeffler Technologies AG & Co. KG, 91074 Herzogenaurach (DE)
(72) Erfinder: DECKER, Florian, 77887 Sasbachwalden (DE); LANGANKI, Jens, 77833 Ottersweier (DE)
(86) Internationale Anmeldenummer: PCT/EP2013/066468
(87) Internationale Veröffentlichungsnummer: WO 2014/032919

(56) Entgegenhaltungen:
- DE-A1- 4 108 385
- FR-A1- 2 544 427
- FR-A1- 2 811 044
- FR-A5- 2 174 549
- US-A- 2 395 905
- US-A- 2 554 874
- US-A- 2 949 991
- US-A- 6 065 578

## Beschreibung

Die vorliegende Erfindung betrifft eine Reibkupplung zum lösbar reibschlüssigen Übertragen von Drehmoment von einer Eingangswelle auf eine Ausgangswelle gemäß dem Oberbegriff des Patentanspruchs 1.

Reibkupplungen werden zur lösbaren reibschlüssigen Übertragung von Drehmoment von Antriebseinheiten auf angetriebene Systeme eingesetzt, beispielsweise in Kraftfahrzeugen, um das Drehmoment von einer Antriebseinheit wie beispielsweise einer Verbrennungskraftmaschine auf einen Antriebsstrang zu übertragen. Je nach zu übertragendem Drehmoment und nach Bauraum ist die Reibkupplung individuell auszulegen, insbesondere im Hinblick auf die notwendige Größe der Reibflächen, die aufgrund der grundsätzlich rotationssymmetrischen Ausführung um die Rotationsachse herum insbesondere zu einer notwendigen Variation der Durchmesser der Reibkupplungen und damit auch der Anpressplatten führt. Bisher musste grundsätzlich für jede Situation eine eigene Anpressplatte ausgelegt werden.

Eine Reibkupplung, die auf den Oberbegriff des Patentanspruchs 1 lesbar ist, ist aus der US 2,554,874 bekannt.

Der vorliegenden Erfindung liegt die Aufgabe zugrunde, die aus dem Stand der Technik bekannten Nachteile zumindest teilweise zu überwinden.

Diese Aufgabe wird erfindungsgemäß gelöst durch eine Reibkupplung gemäß Patentanspruch 1. Bevorzugte Ausführungsbeispiele der vorliegenden Erfindung sind in den abhängigen Patentansprüchen dargelegt.

Die Anpressplatte umfasst ein Halteelement und eine Mehrzahl von Reibplattensegmenten zur Bildung einer Reibfläche, wobei das Halteelement eine Anpressseite und eine der Anpressseite gegenüberliegende Gegenseite aufweist, wobei die Reibplattensegmente an der Anpressseite des Halteelements anliegen und zumindest in Verbindungsbereichen stoffschlüssig mit diesem verbunden sind.

Die Auslegung einer so ausgebildeten Anpressplatte lässt sich in einfacher Weise an die notwendigen Abmessungen, insbesondere an Innen- und/oder Außendurchmesser, der entsprechenden Anforderungen an die Reibkupplung anpassen. Die Reibplattensegmente können alle die gleiche Form und Größe aufweisen, es ist jedoch auch möglich, verschiedene Arten von Reibplattensegmenten zu einer entsprechenden Anpressplatte zu kombinieren, wobei diese so ausgelegt sind, dass sich eine gemeinsame Reibfläche bildet. So ist es beispielsweise möglich, trapezförmige Reibplattensegmente, also Reibplattensegmente, die der Ebene der Reibfläche einen trapezförmigen und in einer Ebene senkrecht zu dieser Ebene einen im Wesentlichen rechteckigen Querschnitt aufweisen, mit rechteckigen Reibplattensegmenten zu kombinieren, also Reibplattensegmenten, die sowohl in der Ebene der Reibfläche oder der Anpressseite des Halbelements einen rechteckigen Querschnitt aufweisen als auch in einer Ebene senkrecht dazu einen im Wesentlichen rechteckigen Querschnitt aufweisen. Bevorzugt ist eine Ausgestaltung, bei der die Reibfläche im Wesentlichen kreisringförmig ausgebildet ist oder an eine solche Geometrie angenähert ist. Jedoch besteht im Rahmen der vorliegenden Erfindung die Möglichkeit, dass keine komplett durchgehende Reibfläche geschaffen wird, sondern dass zwischen den einzelnen Reibplattensegmenten ein gewisser Platz frei bleibt. Mit der Anpressplatte ist eine baukastenartige Zusammenstellung verschiedenartiger Anpressplatten in der Fertigung ohne weiteres möglich. Unter einer stoffschlüssigen Verbindung wird insbesondere auch eine Schweißverbindung, besonders bevorzugt eine linienartige Schweißverbindung oder eine Verbindung über ein Punktschweißverfahren verstanden.

Gemäß einer vorteilhaften Ausgestaltung ist zwischen zwei benachbarten Reibplattensegmenten in Umfangsrichtung ein Spalt vorgesehen ist.

Das Vorsehen eines oder mehrerer Spalte und insbesondere eine Ausgestaltung, bei der zwischen allen Reibplattensegmenten vorgesehen sind, bewirkt im Betrieb der Anpressplatte eine deutlich verbesserte Wärmeabfuhr im Vergleich zu aus dem Stand der Technik bekannten Systemen, da die für den konvektiven Wärmetransport zur Verfügung stehenden Flächen deutlich erhöht sind. Zudem weist ein solches System eine gewisse Ausdehnungstoleranz in Umfangsrichtung auf.

Gemäß einer weiteren vorteilhaften Ausgestaltung weisen die Reibplattensegmente in der Ebene der Reibfläche einen Querschnitt mit mindestens einer der folgenden Formen auf:
a) trapezförmig;
b) rechteckig; und
c) kreisringsegmentförmig.

Alternativ oder zusätzlich ist es auch möglich, dass zumindest ein Teil der Reibplattensegmente einen kuchenstückartigen Querschnitt aufweisen. Eine Ausgestaltung, bei der Reibplattensegmente mit einem trapezförmigen Querschnitt eingesetzt werden, hat sich als besonders flexibel bei Aufbau der Reibplattensegmente herausgestellt. Unter einem Querschnitt ist hier gemeint, dass der Querschnitt in der Ebene der Reibfläche oder auch im Wesentlichen parallel zur Anpressseite einen entsprechenden Querschnitt aufweist. Es ist möglich, verschiedene Querschnitte, insbesondere trapezförmige und rechteckige und/oder verschiedene trapezförmige Querschnitte miteinander zu kombinieren, um so eine möglichst genaue Abbildung der notwendigen Reibfläche für den entsprechenden Anwendungsfall zu erstellen. Auch der Aufbau aus kreissegmentförmigen Elementen ist bevorzugt, da dadurch die ideale Form des Kreisrings als Reibfläche bestmöglich angepasst werden kann.

Gemäß einer weiteren vorteilhaften Ausgestaltung weist das Halteelement umfangsseitig Kühlelemente auf, die in einem Winkel zur Gegenseite ausgerichtet, insbesondere gebogen, sind. Insbesondere ist es von Vorteil, wenn die Kühlelemente nicht nur der Kühlung dienen, sondern gleichermaßen als Auflageflächen bzw. Anlageflächen für die Auflage bzw. Anlage einer Tellerfeder, durch deren Betätigung die Reibkupplung eingerückt und/oder ausgerückt wird.

Bevorzugt ist grundsätzlich eine Ausgestaltung, bei der das Halteelement aus Blech ausgebildet ist. Ein oder mehrere aufgebogene Kühlelemente bewirken im Betrieb eine effektive Kühlung, bei der Wärme an die umgebende Luft abgegeben wird. Alternativ oder zusätzlich können auch Elemente in einem Winkel zur Gegenseite gebogen sein, die als Luftleitelemente dienen, die also insbesondere so gestaltet sind, dass bei Rotation der Anpressplatte Luft in Richtung der Anpressplatte geführt, gedrückt und/oder gesaugt wird. Das Aufbiegen von beispielsweise laschenförmigen Kühlelementen aus dem Blech des Halteelements stellt eine einfache und bevorzugte Ausgestaltung dar.

Gemäß einer weiteren Ausgestaltung weist das Halteelement umfangsseitig laschenförmige Begrenzungselemente auf, die jeweils zur Anlage an einem Reibplattensegment dienen, die in einem Winkel zur Anpressseite ausgerichtet, insbesondere gebogen, sind.

Bei einer Kombination, bei der die Anpressplatte sowohl Kühlelemente als auch Begrenzungselemente aufweist, sind also die Begrenzungselemente in eine Richtung, nämlich hin zur Anpressseite ausgerichtet, insbesondere gebogen, während die Kühlelemente in die andere Richtung, nämlich hin zur Gegenseite, ausgerichtet, insbesondere gebogen sind. Durch das Vorsehen von Begrenzungselementen, an denen die Reibplattensegmente anliegen, kann eine weitere kraftschlüssige Fixierung der Reibplattensegmente am Halteelement erfolgen. Dies ist insbesondere bei der Herstellung und Montage der Anpressplatte von Vorteil, da so die Reibplattensegmente kraftschlüssig am Halteelement fixiert werden können, bevor die stoffschlüssige Verbindung ausgebildet wird. Dies ermöglicht eine Bewegung der vormontierten Anpressplatte vor Bildung der stoffschlüssigen Verbindungen, ohne dass es zu einer Relativbewegung zwischen Reibplattensegmenten und Halteelement kommt. Bevorzugt können die laschenförmigen Begrenzungselemente sowohl am inneren Umfang als auch am äußeren Umfang des Halteelements vorgesehen sein.

Gemäß einer weiteren Ausgestaltung ist zwischen zwei benachbarten Reibplattensegmenten in Umfangsrichtung ein Spalt vorgesehen, wobei die Begrenzungselemente so ausgebildet sind, dass der Spalt mit einer Lücke zwischen zwei benachbarten Begrenzungselementen korrespondiert.

Unter Korrespondieren wird insbesondere verstanden, dass Lücke und Spalt sich zumindest teilweise überlagern, insbesondere fluchtend zueinander ausgerichtet sind. Dies bewirkt im Betrieb, dass ein konvektiver Wärmetransport aus dem Spalt durch die Lücke an die Umgebung möglich ist. So ist eine besonders effektive Kühlung der Anpressplatte im Betrieb gewährleistet. Da sich die Wärmeabfuhr als gravierendes Problem insbesondere im Stadtverkehr oder im Stau herausgestellt hat, da eine schnelle Aufheizung der Anpressplatte bei mehrfacher Betätigung der Reibkupplung hintereinander ohne die notwendige Zeit zur Abkühlung zu einem Rutschen der Reibkupplung führt, kann eine solchermaßen ausgebildete Anpressplatte eine Verbesserung der Kühlsituation bewirken.

Gemäß einer weiteren Ausgestaltung der Anpressplatte weist das Halteelement auf der Gegenseite mindestens eine Sicke auf.

Darunter wird verstanden, dass sich die Sicke in Richtung der Gegenseite auswölbt. Die Sicke bewirkt dabei einerseits bei der Montage der Reibplattensegmente eine gewisse Elastizität des Halteelements, die zum Herstellen des Kraftschlusses zwischen Halteelement und Reibplattensegmenten durch die Begrenzungselemente genutzt werden kann. Andererseits kann die Sicke eine Verstärkungsfunktion des Halteelements und der Anpressplatte erfüllen und weiterhin als Anschlag für weitere Elemente, wie beispielsweise für ein Betätigungselement wie insbesondere eine Tellerfeder dienen.

Weiterhin wird eine Reibkupplung zum lösbar reibschlüssigen Übertragen von Drehmoment von einer Eingangswelle auf eine Ausgangswelle vorgeschlagen, die eine Anpressplatte wie hier beschrieben umfasst.

Weitere Elemente sind beispielsweise Lamellen, eine Gegendruckplatte, eine Tellerfeder, eine Betätigungseinrichtung und ähnliches, die zum Betätigen der Reibkupplung, das heißt zum Einrücken oder Ausrücken, sowie zum Übertragen von Drehmoment von einer Eingangswelle auf eine Ausgangswelle dienen. Es ist von Vorteil, wenn die Reibkupplung eine kraftbasierte oder wegbasierte Verschleißnachstelleinrichtung zur Sensierung und Kompensierung von Kupplungsverschleiß aufweist.

Grundsätzlich kann die Anpressplatte wie hier beschrieben besonders vorteilhaft in so genannten trockenen Reibkupplungen eingesetzt werden. Dies sind Reibkupplungen, bei denen kein mit einem Kühlmedium wie beispielsweise einem Öl, insbesondere einem teil- und/oder vollsynthetischen und/oder Mineralöl gefüllter Nassraum ausgebildet ist, bei denen ein Transport beziehungsweise Abtransport der entstehenden (Reib-)Wärme nicht über das Kühlmedium erfolgen kann. Solche trockenen Systeme sind auf einem besonders guten Wärmeaustausch mit der Umgebungsluft angewiesen. Hier kann die Anpressplatte besonders vorteilhaft bei der Verbesserung des Kühlverhaltens zum Einsatz kommen.

Gemäß einem weiteren Aspekt wird ein Kraftfahrzeug aufweisend eine Antriebseinheit mit einer Abtriebswelle, einem Antriebsstrang und einer Reibkupplung wie in diesem Dokument beschrieben zum lösbaren Verbinden der Abtriebswelle mit dem Antriebsstrang vorgeschlagen. Bevorzugt ist die Antriebseinheit im Kraftfahrzeug vor einer Fahrerkabine und quer zu einer Längsachse des Kraftfahrzeugs angeordnet.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Kupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Reibkupplung ist für Kleinwagen besonders vorteilhaft, weil die Gesamtbaugröße klein ist. Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: ein Beispiel einer Anpressplatte in einer perspektivischen Ansicht;
- Fig. 2:: eine Mehrzahl von Reibplattensegmenten;
- Fig. 3:: ein Halteelement in perspektivischer Ansicht;
- Fig. 4:: einen Ausschnitt aus einer Anpressplatte;
- Fig. 5:: ein erstes Beispiel einer Reibkupplung;
- Fig. 6: ein zweites Beispiel einer Reibkupplung; und
- Fig. 7:: ein Kraftfahrzeug.

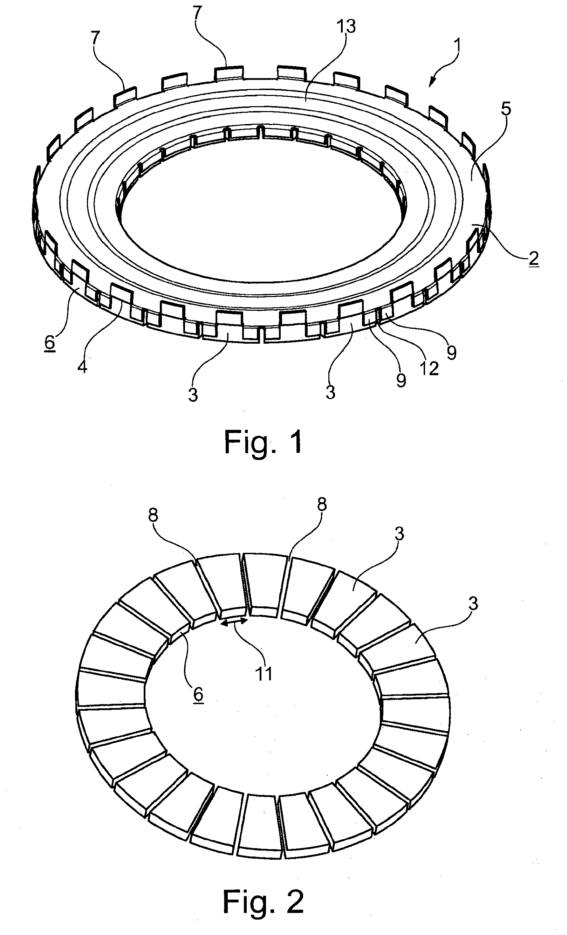

Eine Anpressplatte 1 wird im Folgenden mit den einzelnen Bauteilen unter Bezugnahme insbesondere auf die Figuren 1 bis 4 beschrieben. Fig. 1 zeigt schematisch eine Anpressplatte 1. Die Anpressplatte 1 umfasst ein Halteelement 2 und eine Mehrzahl von Reibplattensegmenten 3, die gemeinsam eine Reibfläche 6 bilden. Das Halteelement 2 weist eine zu den Reibplattensegmenten 3 gerichtete Anpressseite 4 und eine gegenüberliegend zur Anpressseite 4 ausgebildete Gegenseite 5 auf. In der vorliegenden perspektivischen Abbildung in Fig. 1 ist die Gegenseite 5 nach oben und die Anpressseite 4 nach unten ausgerichtet. Die Reibplattensegmente 3 sind so ausgebildet und verteilt, dass sich eine im Wesentlichen kreisringförmige Reibfläche 6 bildet. Die Anpressplatte 1 ist geeignet und bestimmt, in einer entsprechenden Reibkupplung als Reibpartner zum Einsatz zu kommen. Im Betrieb kann dabei die Anpressplatte 1 mit einem entsprechenden Reibpartner über die Reibfläche 6 in reibschlüssige lösbare Verbindung gebracht werden.

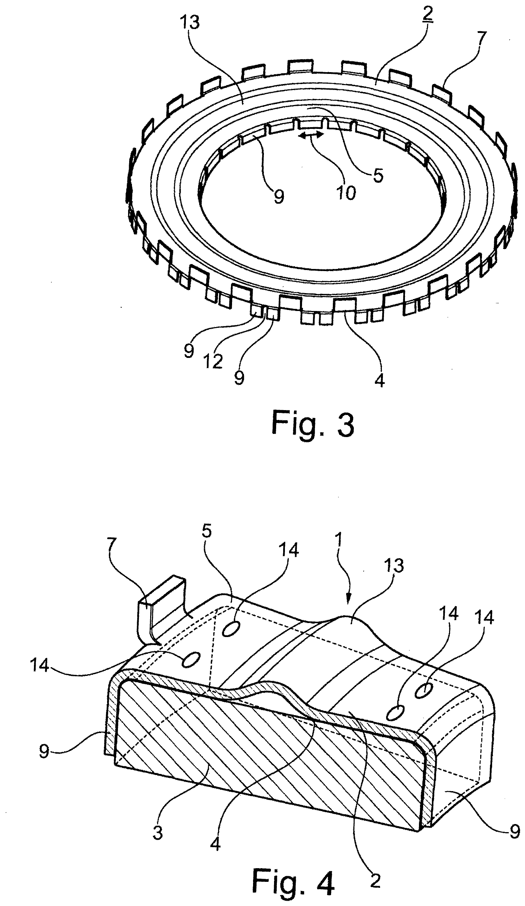

Die Reibfläche 6 ist im vorliegenden Beispiel dabei kein vollständig gefüllter und geschlossener Kreisring, vielmehr weisen die einzelnen Reibplattensegmente 3 Spalte zwischen zwei benachbarten Reibplattensegmenten 3 auf. Dies wird im Weiteren noch näher erläutert. Die Reibplattensegmente 3 liegen an der Anpressseite 4 des Halteelements 2 an und sind zumindest in Verbindungsbereichen stoffschlüssig mit dem Halteelement 2 verbunden. Die Verbindungsbereiche werden insbesondere unter Bezugnahme auf Fig. 4 unten noch näher erläutert.

Das Halteelement 2 weist ferner Kühlelemente 7 auf. Im vorliegenden Beispiel handelt es sich bei den Kühlelementen 7 um laschenförmige Bereiche, die in einem Winkel zur Gegenseite 5 hin gebogen sind. Dieser Winkel ist im vorliegenden Beispiel 90°, andere Winkel sind ebenfalls möglich. Alternativ oder zusätzlich ist es möglich, diese Kühlelemente 7 auch als Luftführungselemente auszubilden, beispielsweise indem diese nicht wie im vorliegenden Beispiel in Richtung des äußeren Umfangs des Halteelements 2 ausgebildet sind, sondern zumindest bereichsweise einen Winkel gegenüber dieser Umfangsrichtung aufweisen, so dass bei der Rotation der Anpressplatte 1 Luft in Richtung der Anpressplatte 1 geführt wird.

Insbesondere ist es von Vorteil, wenn die Kühlelemente 7 nicht nur zur Kühlung dienen, sondern gleichermaßen als Auflageflächen bzw. Anlageflächen für die Auflage bzw. Anlage einer Tellerfeder (hier nicht gezeigt), durch deren Betätigung die Reibkupplung eingerückt und/oder ausgerückt wird.

Fig. 2 zeigt schematisch eine perspektivische Ansicht der entsprechenden Mehrzahl an Reibplattensegmente 3. Diese sind kreisringartig ausgerichtet, wie sie auch im verbundenen Zustand mit dem Halteelement 2 ausgerichtet sind. Zwischen zwei benachbarten Reibplattensegmenten 3 sind jeweils Spalte 8 ausgelassen. Im Betrieb kommt es durch die Einrück- und Ausrückvorgänge, also das Ein- und Auskuppeln, bei dem die reibschlüssige Verbindung zwischen der Reibfläche 6 und einer korrespondierenden Reibfläche eines Reibpartners hergestellt oder gelöst wird, zu einer Aufheizung der Reibplattensegmente 3. Durch Maßnahmen wie beispielsweise die Spalte 8 wird dabei die zur Abgabe der Wärme durch Konvektion vorhandene Oberfläche der Reibplattensegmente 3 deutlich vergrößert. Weitere Maßnahmen wie die Kühlelemente 7 oder ähnliches können hierbei weiter zu einer effektiven Abkühlung beitragen. Die Anpressplatte 1, wie hier vorgestellt und diskutiert, hat gegenüber einteiligen Anpressplatten den Vorteil, dass eine deutlich erhöhte Dissipation der Wärme erreicht werden kann, so dass die Anpressplatte 1 schneller abkühlt und so ein hitzebedingtes Rutschen der entsprechenden Kupplung vermieden werden kann.

Fig. 3 zeigt schematisch eine perspektivische Ansicht des Halteelements 2mit den Kühlelementen 7, die in Richtung der Gegenseite 5 gebogen sind. Ferner umfasst das Halteelement 2 Begrenzungselemente 9. Bei diesen Begrenzungselementen 9 handelt es sich um laschenförmige Bereiche, die entgegengesetzt zu den Kühlelementen 7, das heißt in Richtung der Anpressseite 4, in einem Winkel gebogen sind. Insbesondere kann dieser Winkel etwa ein rechter Winkel sein. Durch die Begrenzungselemente 9, die sowohl umfangsseitig außen als auch umfangsseitig innen am kreisringförmigen Halteelement 2 ausgebildet sind, kann eine weitere kraftschlüssige Fixierung der Reibplattensegmente 3. Dies kann besonders vorteilhaft auch bei der Herstellung der Anpressplatte 1 genutzt werden, in dem eine solche Klemmung oder kraftschlüssige Verbindung zwischen dem Halteelement 2 und den Reibplattensegmenten 3 vermittelt durch die Begrenzungselemente 9 hergestellt wird, bevor die stoffschlüssige Verbindung zwischen Reibplattensegmenten 3 und Halteelement 2 ausgebildet wird. Dies vereinfacht die Herstellung einer solchen Anpressplatte ganz erheblich.

Die Begrenzungselemente 9 sind so ausgebildet, dass jedes Begrenzungselement 9 lediglich an einem Reibplattensegment 3 im zusammengebauten Zustand der Anpressplatte 1 anliegt. Im vorliegenden Beispiel sind die am inneren Umfang des Halteelements 2 ausgebildeten Begrenzungselemente 9 so ausgebildet, dass ihre Ausdehnung 10 in Umfangsrichtung der entsprechenden Breite 11 der Reibplattensegmente 3 in Umfangsrichtung entspricht. Die am äußeren Umfang des Halteelements 2 ausgebildeten Begrenzungselemente 9 sind so ausgebildet, dass im verbauten Zustand ein Reibplattensegment 3 an zwei Begrenzungselementen 9 so anliegt, dass der Spalt 8 mit einer Lücke 12 zwischen zwei Begrenzungselementen 9 korrespondiert, insbesondere fluchtend mit dieser ausgerichtet sein kann. Dies verbessert weiterhin die Belüftung der Anpressplatte 1, da konvektive Strömungen durch die Spalte 8 und die Lücken 12 nach außen für einen entsprechenden Wärme- beziehungsweise Lufttransport sorgen können. So kann die Abkühlung der Anpressplatte 1 weiter verbessert werden.

Weiterhin weist das Halteelement 2 eine Sicke 13 auf der Gegenseite 5 auf. Diese Sicke 13 kann einerseits als Anlagefläche für eine zur Betätigung der entsprechenden Reibkupplung nötige Tellerfeder (hier nicht gezeigt) dienen, andererseits kann die Sicke auch eine leichtere (Vor-)Montage der Reibplattensegmenten 3 im Halteelement 2 ermöglichen, da dadurch eine Art federelastisches Element gebildet wird, welches ein Einlegen und eine folgende kraftschlüssige Verbindung zwischen Reibplattensegmenten 3 und Halteelement 2 vermittelt durch die Begrenzungselemente 9 ermöglicht.

Fig. 4 zeigt noch einmal einen Ausschnitt der montierten Anpressplatte 1. Ein Reibplattensegment 3 liegt dabei innerhalb der Begrenzungselemente 9 des Halteelements 2. Das Halteelement 2 bildet also eine Art Aufnahmeelement für die entsprechenden Reibplattensegmente 3. In Verbindungsbereichen 14 sind Halteelemente 2 und Reibplattensegment 3 dabei stoffschlüssig verbunden. Bevorzugt ist in den Verbindungsbereichen 14 eine Schweißverbindung, insbesondere eine Punktschweißverbindung, zwischen Reibplattensegment 3 und Halteelement 2 ausgebildet. Vorzugsweise sind die Verbindungsbereiche 14 kreisringartig angeordnet, besonders bevorzugt zwei Kreisringe von Verbindungsbereichen zu beiden Seiten der Sicke 13.

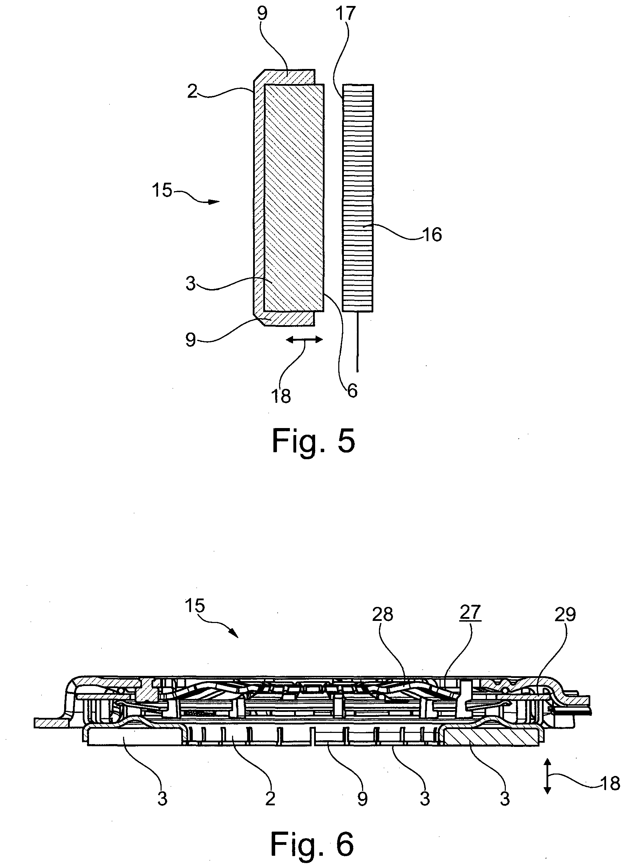

Fig. 5 zeigt schematisch einen Ausschnitt einer entsprechenden Reibkupplung 15. Die Reibkupplung 15 umfasst neben einer Anpressplatte 1 eine Gegendruckplatte 16. Hierbei kann die Anpressplatte 1 mit einer Eingangswelle der Reibkupplung 15 (nicht gezeigt) und die Gegendruckplatte 16 mit einer Ausgangswelle der Reibkupplung 15 (nicht gezeigt) mitrotieren. Durch Herstellung eines Reibschlusses zwischen Anpressplatte 1 und Gegendruckplatte 16 kann so die Übertragung von Drehmoment von der Eingangswelle auf die Ausgangswelle lösbar erfolgen. Der Reibschluss zwischen der Reibfläche 6 der Anpressplatte 1 und einer entsprechenden Reibfläche 17 der Gegendruckplatte 16 kann durch Bewegen der Anpressplatte 1 in eine axiale Richtung 18 erfolgen.

Fig. 6 zeigt ein weiteres Beispiel einer Reibkupplung 15 mit einer Anpressplatte 1 wie hier beschrieben. Diese umfasst neben einem Halteelement 2 mit einer Vielzahl von Begrenzungselemente 9 mehrere Reibplattensegmente. Über eine tellerfederartige Betätigungseinrichtung 26 mit Tellerfederzungen 27 und einem Kraftrand 28 erfolgt eine Betätigung der Reibkupplung 15 durch eine entsprechende Bewegung der Anpressplatte 1 in axialer Richtung 18.

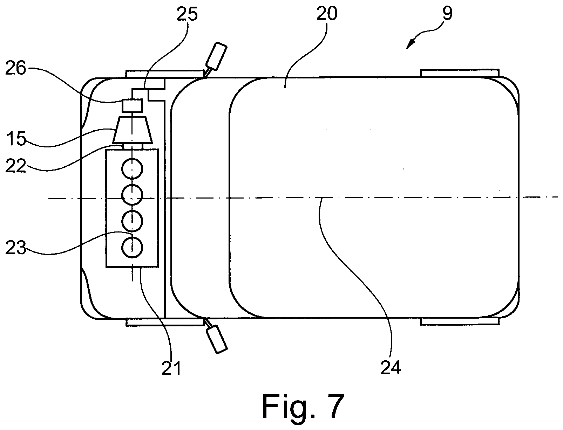

Fig. 7 zeigt sehr schematisch ein Kraftfahrzeug 19. Dieses weist eine Fahrerkabine 20 und eine Antriebseinheit 21 auf. Die Antriebseinheit 21 ist vor der Fahrerkabine 20 ausgebildet. Die Antriebseinheit 21 umfasst insbesondere eine Verbrennungskraftmaschine oder auch einen Elektromotor. Die Antriebseinheit 21 ist über eine Abtriebswelle 22 mit einer Reibkupplung 15 verbunden. Die Abtriebswelle 22 fungiert also als Eingangswelle der Reibkupplung 15. Hierbei rotiert die Abtriebswelle 21 um die Rotationsachse 23, die quer zu einer Längsachse 24 des Kraftfahrzeugs 19 ausgerichtet ist. Über die Reibkupplung 15 ist die Antriebseinheit 21 mit einem Antriebsstrang 25 des Kraftfahrzeugs 19 verbindbar. Hierbei fungiert eine Eingangswelle 26 des Antriebsstrangs 25 als Ausgangswelle der Reibkupplung 15.

### Bezugszeichenliste

- 1: Anpressplatte
- 2: Halteelement
- 3: Reibplattensegment
- 4: Anpressseite
- 5: Gegenseite
- 6: Reibfläche
- 7: Kühlelement
- 8: Spalt
- 9: Begrenzungselement
- 10: Ausdehnung
- 11: Breite
- 12: Lücke
- 13: Sicke
- 14: Verbindungsbereich
- 15: Reibkupplung
- 16: Gegendruckplatte
- 17: Reibfläche
- 18: axiale Richtung
- 19: Kraftfahrzeug
- 20: Fahrerkabine
- 21: Antriebseinheit
- 22: Abtriebswelle
- 23: Rotationsachse
- 24: Längsachse
- 25: Antriebsstrang
- 26: Eingangswelle
- 27: tellerfederartige Betätigungseinrichtung
- 28: Tellerfederzunge
- 29: Kraftrand

## Patentansprüche

1. Reibkupplung (15) zum lösbar reibschlüssigen Übertragen von Drehmoment von einer Eingangswelle auf eine Ausgangswelle, mit einer Anpressplatte (1) umfassend ein kreisringförmiges Halteelement (2) und eine Mehrzahl von Reibplattensegmenten (3) zur Bildung einer Reibfläche (6), wobei das Halteelement (2) eine Anpressseite (4) und eine der Anpressseite (4) gegenüberliegende Gegenseite (5) aufweist, und wobei die Reibplattensegmente (3) an der Anpressseite (4) des Halteelements (2) anliegen und zumindest in Verbindungsbereichen (14) stoffschlüssig mit diesem verbunden sind, wobei die Reibkupplung (15) eine tellerfederartige Betätigungseinrichtung (26) zur Bewegung der Anpressplatte (1) in axialer Richtung der Reibkupplung (15) aufweist, und die tellerfederartige Betätigungseinrichtung (26) an umfangsseitigen Kühlelementen (7) des Halteelements (2) oder an einer Sicke (13), die auf der Gegenseite (5) des Halteelements (2) ausgebildet ist, anliegt.

2. Reibkupplung (15) nach Anspruch 1, wobei zwischen zwei benachbarten Reibplattensegmenten (3) der Anpressplatte (1) in Umfangsrichtung ein Spalt (8) vorgesehen ist.

3. Reibkupplung (15) nach einem der vorhergehenden Ansprüche, wobei die Reibplattensegmente (3) der Anpressplatte (1) in der Ebene der Reibfläche (6) einen Querschnitt mit mindestens einer der folgenden Formen aufweisen:
a) trapezförmig;
b) rechteckig; und
c) kreisringsegmentförmig.

4. Reibkupplung (15) nach einem der vorhergehenden Ansprüche, wobei die Kühlelemente (7) in einem Winkel zur Gegenseite (5) des Halteelements (2) ausgerichtet sind.

5. Reibkupplung (15) nach einem der vorhergehenden Ansprüche, wobei das Halteelement (2) umfangsseitig laschenförmige Begrenzungselemente (9), jeweils zur Anlage an einem Reibplattensegment (3), aufweist, die in einem Winkel zur Anpressseite (4) ausgerichtet sind.

6. Reibkupplung (15) nach Anspruch 5, wobei die Begrenzungselemente (9) an einem inneren und einem äußeren Umfang des Halteelements (2) ausgebildet sind.

7. Reibkupplung (15) nach Anspruch 5 oder 6, wobei zwischen zwei benachbarten Reibplattensegmenten (3) in Umfangsrichtung ein Spalt (8) vorgesehen ist, und die Begrenzungselemente (9) so ausgebildet sind, dass der Spalt (8) mit einer Lücke (12) zwischen zwei benachbarten Begrenzungselementen (3) korrespondiert.

8. Kraftfahrzeug (19) aufweisend eine Antriebseinheit (21) mit einer Abtriebswelle (22), einem Antriebsstrang (25) und einer Reibkupplung (15) nach einem der vorhergehenden Ansprüche zum lösbaren Verbinden der Abtriebswelle (22) mit dem Antriebsstrang (25).

## Claims

1. A friction clutch (15) for transmitting torque in a releasable frictionally locking manner from an input shaft to an output shaft, having a pressure plate (1) comprising an annular holding element (2) and a plurality of friction plate segments (3) for forming a friction surface (6), the holding element (2) comprising a pressing side (4) and a counterside (5) which lies opposite the pressing side (4), the friction plate segments (3) bearing against the pressing side (4) of the holding element (2) and being connected in an integrally joined manner to the latter at least in connecting regions (14), wherein the friction clutch (15) has a disc spring-like actuating device (26) for moving the pressure plate (1) in the axial direction of the friction clutch (15), and the disc spring-like actuating device (26) bears against the circumferential-side cooling elements (7) of the holding element (2) or against a bead (13) which is configured on the counterside (5) of the holding element (2).

2. The friction clutch (15) according to Claim 1, a gap (8) being provided in the circumferential direction between two adjacent friction plate segments (3) of the pressure plate (1).

3. The friction clutch (15) according to either of the preceding claims, the friction plate segments (3) of the pressure plate (1) having a cross-section in the plane of the friction surface (6) which has at least one of the following shapes:
a) trapezoidal;
b) rectangular; and
c) annular segment-shaped.

4. The friction clutch (15) according to one of the preceding claims, the cooling elements (7) being oriented at an angle with respect to the counterside (5) of the holding element (2).

5. The friction clutch (15) according to one of the preceding claims, wherein the holding element (2) comprises flap-shaped limiting elements (9) on the circumferential side, each for bearing against a friction plate segment. (3), which are aligned at an angle to the pressing side (4).

6. The friction clutch (15) according to Claim 5, the limit elements (9) being configured on an inner and an outer circumference of the holding element (2).

7. The friction clutch (15) according to Claim 5 or 6, a gap (8) being provided in the circumferential direction between two adjacent friction plate segments (3), and the limit elements (9) being configured in such a way that the gap (8) corresponds to a void (12) between two adjacent limit elements (3).

8. A motor vehicle (19) comprising a drive unit (21) having an output shaft (22), a drive train (25) and a friction clutch (15) according to one of the preceding claims for the releasable connection of the output shaft (22) to the drive train (25).

## Revendications

1. Embrayage à friction (15) pour le transfert d'un couple, par engagement par friction amovible, d'un arbre d'entrée à un arbre de sortie, comprenant un plateau de pression (1) comprenant un élément de retenue (2) en forme de bague circulaire et une pluralité de segments de plateau de friction (3) pour la formation d'une surface de friction (6), l'élément de retenue (2) présentant un côté de pression (4) et un autre côté (5) opposé au côté de pression (4) et les segments de plateau de friction (3) s'appliquant contre le côté de pression (4) de l'élément de retenue (2) et étant connectés à celui-ci par liaison de matière au moins dans des zones de liaison (14), dans lequel l'embrayage à friction (15) présente un dispositif d'actionnement de type rondelle ressort (26) pour le déplacement du plateau de pression (1) dans la direction axiale de l'embrayage à friction (15) et le dispositif d'actionnement de type rondelle ressort (26) s'applique contre des éléments de refroidissement périphériques (7) de l'élément de retenue (2) ou contre une moulure (13) qui est réalisée sur l'autre côté (5) de l'élément de retenue (2).

2. Embrayage à friction (15) selon la revendication 1, dans lequel une fente (8) est prévue dans la direction périphérique entre deux segments de plateau de friction adjacents (3) du plateau de pression (1).

3. Embrayage à friction (15) selon l'une quelconque des revendications précédentes, dans lequel les segments de plateau de friction (3) du plateau de pression (1) présentent, dans le plan de la surface de friction (6), une section transversale ayant au moins l'une des formes suivantes, à savoir :
a) trapézoïdale ;
b) rectangulaire ; et
c) en forme de segment de bague circulaire.

4. Embrayage à friction (15) selon l'une quelconque des revendications précédentes, dans lequel les éléments de refroidissement (7) sont orientés suivant un certain angle par rapport à l'autre côté (5) de l'élément de retenue (2).

5. Embrayage à friction (15) selon l'une quelconque des revendications précédentes, dans lequel l'élément de retenue (2) présente des éléments de limitation périphériques en forme de patte (9), respectivement destinés à être appliqués contre un segment de plateau de friction (3), lesquels sont orientés suivant un certain angle par rapport au côté de pression (4).

6. Embrayage à friction (15) selon la revendication 5, dans lequel les éléments de limitation (9) sont réalisés au niveau d'une périphérie intérieure et d'une périphérie extérieure de l'élément de retenue (2).

7. Embrayage à friction (15) selon la revendication 5 ou 6, dans lequel une fente (8) est prévue dans la direction périphérique entre deux segments de plateau de friction (3) adjacents et les éléments de limitation (9) sont réalisés de telle sorte que la fente (8) corresponde à un espace (12) entre deux éléments de limitation adjacents (3).

8. Véhicule à moteur (19) présentant une unité d'entraînement (21) avec un arbre de sortie (22), une chaîne cinématique (25) et un embrayage à friction (15) selon l'une quelconque des revendications précédentes pour la connexion amovible de l'arbre de sortie (22) à la chaîne cinématique (25).
